(19) Europäisches Patentamt

European Patent Office

Office européen des brevets

(11) Publication number: **0 372 397 B1**

(12) **EUROPEAN PATENT SPECIFICATION**

(45) Date of publication of patent specification: **22.12.93** (51) Int. Cl.5: **B64G 1/28**

(21) Application number: **89122118.6**

(22) Date of filing: **30.11.89**

(54) **Spin stabilization method using momentum wheels.**

(30) Priority: **09.12.88 US 282418**

(43) Date of publication of application:
**13.06.90 Bulletin 90/24**

(45) Publication of the grant of the patent:
**22.12.93 Bulletin 93/51**

(84) Designated Contracting States:
**DE FR GB IT**

(56) References cited:
**FR-A- 2 369 612**
**US-A- 4 275 861**

(73) Proprietor: **Hughes Aircraft Company**
**7200 Hughes Terrace**
**P.O. Box 45066**
**Los Angeles, California 90045-0066(US)**

(72) Inventor: **Salvatore, Jeremiah O.**
**316 Calle Andalucia**
**Redondo Beach California 90277(US)**

(74) Representative: **Witte, Alexander, Dr.-Ing.**
**Witte, Weller, Gahlert & Otten**
**Patentanwälte**
**Augustenstrasse 14**
**D-70178 Stuttgart (DE)**

EP 0 372 397 B1

**Description**

This invention relates to a method for stabilizing a spinning spacecraft exposed to destabilizing moments and/or possessing unfavorable mass properties.

Spin stabilization is the simplest technique for controlling spacecraft attitude for orbiting spacecraft during the launch and orbit injection phases, and the on-station orbiting phase. A spacecraft (or any other generally rigid body) can be characterized as having three principal moment of inertia axes which typically each have a unique moment of inertia value, thus defining a maximum axis, a minimum axis, and an intermediate axis. A continuing problem in spacecraft design is to insure spacecraft stability during rotation. In order to provide stability, spacecraft are spun about either a maximum principal axis which is preferred because it is passively stable, or their minimum principal axis, which provides stability if used with active nutation control systems. Rotation about the intermediate axis is inherently unstable and requires a continuous active thruster control system. Since design constraints in spacecraft design often result in spin being preferred about the intermediate or minimum axes, some form of nutation control system is ordinarily required. Such systems, however, add complexity, cost and weight to the spacecraft.

US-A-4 275 861 discloses a system and a method for stabilizing a spacecraft having three mutually perpendicular principal axes, defined as x, y and z axes, with the spacecraft spinning around the z-axis. The prior art system may include a pair of rotatable momentum wheels carried by the spacecraft, which may be arranged such that their axis of rotation is oriented at an angle with respect to the z-axis on opposite sides of the x-axis in a common plane which includes both the z and y axes. Also the rotatable momentum wheels may be operated to ensure that the resultant angular momentum vector of the rotatable momentum wheels coincides with the total angular momentum vector of the spacecraft to ensure that the spin of the spacecraft is stabilized about the z-axis in a passively stable mode. However, this prior art reference is primarily concerned with the re-orientation of a spacecraft by means of momentum wheels, although the conditions for maintaining a passively stable mode are given. However, there is no indication how the disclosed system could be used for stabilizing a spacecraft about one of its axes in an actively stable mode.

In view of the foregoing, there is a need to provide a simplified method for stabilizing a spacecraft permitting rotation about moment of inertia axes other than the maximum moment of inertia axis in an actively stable manner.

This object is achieved according to the method of claim 1.

A pair of rotatable momentum wheels arranged for rotation according to the preamble of claim 1 is rotated according to the invention in respectively opposite directions but at the same speed, whereby components of angular momentum thereby generated by said rotatable momentum wheels along the y-axis are annulingly subtractive, and components of angular momentum thereby generated by said rotatable momentum wheels along the z-axis are additive, thereby providing additional angular momentum along the z-axis. The direction and magnitude of the additional momentum are selected in such a manner that the spin of the spacecraft is stabilized about the z-axis in an actively stable mode.

According to the invention the rotational axis of the spacecraft can be a principal axis of maximum or intermediate moment of inertia that is made to behave as if it were a principal axis of minimum moment of inertia. This application is particularly useful, if the desired rotation axis of the spacecraft tends to be an axis of minimum moment of inertia, but it would be simpler to ensure it always remains a minimum axis and employ active nutation control.

Further reference is made to FR-A-2 369 612, which also uses momentum wheels for stabilization. However, the momentum wheels are operated in response to the signals provided by sensors of inertia, i.e. this control system necessitates a feedback loop. In addition, the known system requires four momentum wheels.

In the accompany drawing:

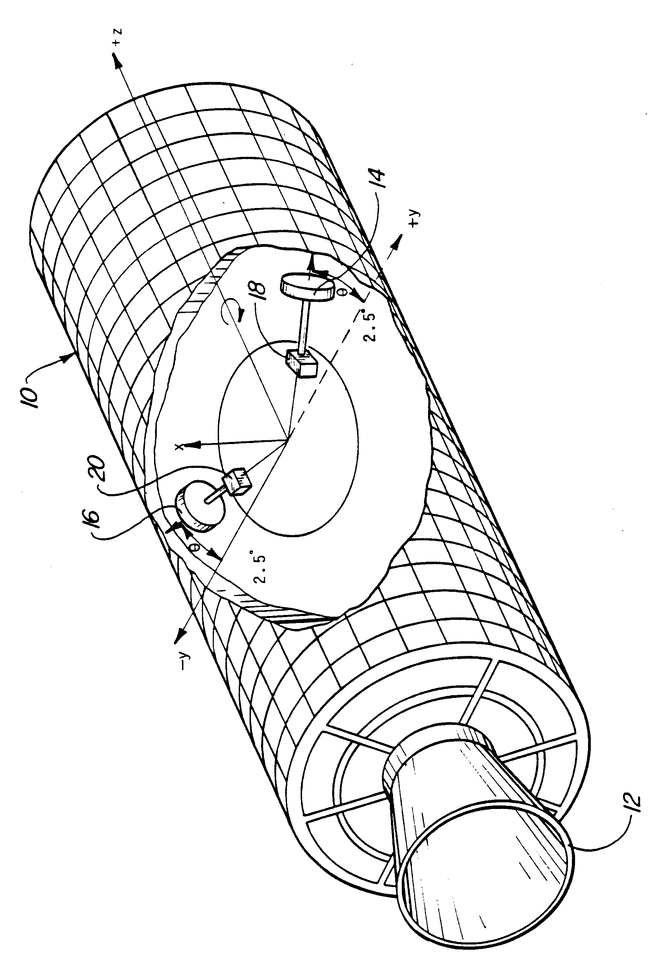

FIG. 1 is a pictorial view of a spacecraft including a pair of momentum wheels operating in accordance with this invention to provide active spacecraft stability.

The physical elements of the system according to the present invention will be described with reference to the figure, which is followed by a description of the theory of operation of the system. FIG. 1 illustrates a representative spacecraft 10 which is cylindrical in shape and has a main thruster 12. Three reference orthogonal axes are oriented with respect to spacecraft 10 such that the spacecraft is rotating about the z axis. A pair of momentum wheels 14 and 16 are provided which are oriented at an angle (theta) from the y axis. Suitable momentum wheel drive means 18 and 20 are provided for rotating the momentum wheels in a desired direction and speed.

The angle $\theta$ is selected to provide a desired component of angular momentum, $h_\omega$ , along the spacecraft spin axis as required by the theory in Equations (1) - (8) below.

The theory of operation of the system according to this invention will now be described. A single rigid spinning body can be characterized by three principal moments of inertia axes $I_x$, $I_y$, $I_z$. Assuming the body is spinning about the z axis at a rate $\omega_z$, it can be shown that the rotation is stable if the following inequality is satisfied:

$$(I_z-I_x)\ (I_z-I_y)\ \omega_z^2 > 0 \qquad (1)$$

Note that rotation about the z axis is stable when it is an axis of maximum or minimum moment of inertia, and unstable when it is an axis of intermediate moment of inertia. Defining $\sigma_x = I_z/I_x$, and $\sigma_y = I_z/I_y$, the condition for rigid body stability can be expressed as:

$$\sigma_x > 1 \text{ and } \sigma_y > 1 \text{ or } \sigma_x < 1 \text{ and } \sigma_y < 1 \qquad (2)$$

It can be shown for a "quasi" rigid body such as spacecraft 10 (where energy dissipation occurs and damping is present), that the only stable rotation is when the z axis is an axis of maximum moment of inertia, or:

$$\sigma_x > 1, \sigma_y > 1 \qquad (3)$$

This is the state corresponding to minimum rotational energy. Defining the "equivalent roll-to-pitch ratio" for an asymmetric body to be $\sigma_e$, then:

$$(\sigma_e-1)^2 = (\sigma_x-1)\ (\sigma_y-1) \qquad (4)$$

We identify the familiar stability criterion that the "roll-to-pitch" ratio must be greater than 1, if passive stability is desired.

This stability criterion changes significantly if one allows an additional source of momentum on the desired axis of rotation such as provided by momentum wheels 14 and 16. For example, assuming a wheel or combination of wheels providing a component of angular momentum, $h_\omega$, parallel to the z axis, it can be shown that the rotation is stable if the following inequality is satisfied:

$$[(I_z-I_x)\omega_z + h_\omega]\ [(I_z-I_y)\omega_z + h_\omega] > 0 \qquad (5)$$

If one identifies the total spin momentum $h_s$ as:

$$h_s = I_z\omega_z + h_\omega \qquad (6)$$

and generalizes the inertia ratios $\sigma_x$ and $\sigma_y$ to be:

$$\sigma_x = \frac{h_s}{I_x\omega_z}\ , \qquad \sigma_y = \frac{h_s}{I_y\omega_z} \qquad (7)$$

Then Equation (5) implies that a quasi rigid body such as spacecraft 10 with an additional momentum source can have a passively stable rotation about the z axis which is not required to be the axes of maximum moment of inertia if $\sigma_x > 1$ and $\sigma_y > 1$. Adjustment of the spin rate of the main body together with the momentum of the additional source can compensate for adverse mass properties and insure stable rotation about the desired axis.

By way of illustrative example a pair of momentum wheels 14 and 16 may be oriented with an angle (theta) of 2.5 degrees from the y axis toward the z axis (i.e., 87.5 degrees from the z axis). Other values for angle theta could be used with equal success and are within the scope of this invention. In order to obtain the desired momentum source along the spin axis, wheels 14 and 16 can be spun in opposite directions at their maximum speed. The moment capabilities of wheels 14 and 16 can be chosen using the relationship

given by:

$$\triangle I = \frac{h_\omega}{\omega_z} ,$$

(8)

where $\triangle I$ is the effective increase in spacecraft spin moment-of-inertia required to achieve a passively stable spin about the z-axis. Since momentum wheels 14 and 16 combine to provide an appropriate angular momentum vector component, $h_\omega$, in the direction of desired rotation of spacecraft 10, they will insure that the spacecraft will spin about the desired axis in a passively stable mode. This rotational axis of the spacecraft 10 can be any principal axis of intermediate or minimum moment of inertia but will behave as if it were a principal axis of maximum moment of inertia.

In some cases, however, such a passively stable mode of stabilization is not desired. Instead, if the desired rotation axis of spacecraft 10 tends to be an axis of minimum moment of inertia, but it would be simpler to ensure it always remains a minimum axis and employ active nutation control. This actively stable mode can be achieved according to the invention if orientation of sufficiently large angular momentum vectors of momentum wheels 14 and 16 in directions opposite the direction of desired rotational axis of the spacecraft is ensured. In other words, according to the invention the rotational axis of the spacecraft can be a principal axis of maximum or intermediate moment of inertia but can be made to behave as if it were a principal axis of minimum moment of inertia.

Finally, it may be stated that the addition of on-board sensing, software, closed loop control, autonomous or automatic operation, etc. does not change or detract from the basic scope or meaning of this invention.

## Claims

1. Method for stabilizing a spacecraft (10) having three mutually perpendicular principal axes, defined as x, y and z axes, with the spacecraft (10) spinning around the z-axis, using a stabilization system including
   - a pair of rotatable momentum wheels (14, 16) carried by the spacecraft (10), each of said wheels (14, 16) having an axis of rotation oriented at an angle with respect to the z-axis on opposite sides of the z-axis in a common plane which includes both the z and y axes;
   - means for rotating said rotatable momentum wheels (14, 16);
   characterized in that:
   - said rotatable momentum wheels (14, 16) are rotated in respectively opposite directions but at the same speed, whereby components of angular momentum thereby generated by said rotatable momentum wheels (14, 16) along the y-axis are annulingly subtractive, and components of angular momentum thereby generated by said rotatable momentum wheels (14, 16) along the z-axis are additive, thereby providing additional angular momentum along the z-axis;
   - wherein the direction and magnitude of said additional momentum are selected such that the spin of the spacecraft (10) is stabilized about the z-axis in an actively stable mode.

## Patentansprüche

1. Verfahren zum Stabilisieren eines Raumschiffes (10) mit drei zueinander senkrechten Hauptachsen, die als x-Achse, y-Achse und z-Achse definiert sind, wobei das Raumschiff (10) um die z-Achse rotiert, unter Verwendung einer Stabilisierungsanlage mit
   - einem Paar von dem Raumschiff (10) getragenen drehbaren Momentenrädern (14, 16), wobei jedes der Räder (14, 16) eine Rotationsachse aufweist, die in einem Winkel in bezug auf die z-Achse auf gegenüberliegenden Seiten der z-Achse in einer gemeinsamen Ebene orientiert ist, die sowohl die z- als auch die y-Achse einschließt;
   - Mitteln, um die drehbaren Momentenräder (14, 16) in Rotation zu versetzen;
   dadurch gekennzeichnet, daß:
   - die drehbaren Momentenräder (14, 16) in zueinander entgegengesetzten Richtungen in Rotation versetzt werden, jedoch mit der gleichen Geschwindigkeit, wobei Komponenten des durch die drehbaren Momentenräder (14, 16) erzeugten Winkelmomentes in bezug auf die y-Achse sich gegeneinander aufheben und wobei Komponenten des durch die drehbaren Momentenräder (14, 16) erzeugten Winkelmomentes entlang der z-Achse additiv sind, wodurch sie ein zusätzliches Winkelmoment entlang der z-Achse erzeugen;

- wobei die Richtung und die Größe des zusätzlichen Momentes derart ausgewählt werden, daß die Drehung des Raumschiffes (10) um die z-Achse in einer aktiv stabilen Weise stabilisiert wird.

**Revendications**

1.  Procédé pour stabiliser un véhicule spatial (10) ayant trois axes principaux mutuellement perpendiculaires définis comme étant des axes x, y et z, le véhicule spatial (10) tournant sur lui-même autour de l'axe z, utilisant un système de stabilisation incluant:
    - deux volants d'inertie rotatifs (14, 16) emportés par le véhicule spatial (10), chacun desdits volants (14, 16) ayant un axe de rotation orienté d'un certain angle par rapport à l'axe z, de chaque côté de l'axe z, dans un plan commun qui inclut à la fois les axes z et y;
    - un moyen pour mettre en rotation lesdits volants d'inertie rotatifs (14, 16);
    caractérisé en ce que:
    - lesdits volants d'inertie rotatifs (14, 16) sont mis en rotation dans des sens respectivement opposés mais à la même vitesse, de telle sorte que les composantes du moment angulaire ainsi engendré par lesdits volants d'inertie rotatifs (14, 16), le long de l'axe y s'annulent par soustraction et que les composantes du moment angulaire ainsi engendré par lesdits volants d'inertie rotatifs (14, 16) le long de l'axe z soient additifs, ce qui fournit un moment angulaire supplémentaire le long de l'axe z;
    - la direction et l'amplitude dudit moment supplémentaire étant sélectionnées de telle façon que la rotation sur lui-même du véhicule spatial (10) soit stabilisée autour de l'axe z dans un mode activement stable.